# EUROPÄISCHE PATENTANMELDUNG

(11) **EP 2 669 451 A2**
(43) Veröffentlichungstag der Anmeldung: **04.12.2013**
(21) Anmeldenummer: 13168233.8
(22) Anmeldetag: 17.05.2013
(51) Int. Cl.: E04H 6/02, F24J 2/04, F24J 2/52, H01L 31/042

(54) **Tragkonstruktion und Verfahren zur Montage einer Tragkonstruktion**

(30) Priorität: 30.05.2012 DE 102012104663
(71) Anmelder: SCHÜCO International KG, 33609 Bielefeld (DE)
(72) Erfinder: Weeke, Andreas, 32120 Hiddenhausen (DE)
(74) Vertreter: Dantz, Jan Henning

(57) **Zusammenfassung**

Eine Tragkonstruktion (1), insbesondere für einen Unterstand, umfasst mindestens zwei bodenseitig festlegbare Träger (2), die jeweils zwei V-förmig angeordnete Pfosten (5, 6, 7, 8) umfassen, wobei zwei Prosten (5, 6, 7, 8) zweier beabstandeter Träger (2) über einen quer zur Ebene der Pfosten (5, 6, 7, 8) angeordneten Tragbalken (12) verbunden sind und der Tragbalken (12) an gegenüberliegenden Enden in einem Halter (10) aufgenommen ist, wobei die Halter (10) in einer Montageposition um eine horizontale Achse (51) drehbar an einem Pfosten (5, 6, 7, 8) gelagert sind und nach Ausrichtung des Tragbalkens (12) an dem Pfosten (5, 6, 7, 8) fixierbar sind. Ferner betrifft die Erfindung ein Verfahren zur Montage einer Tragkonstruktion (1).

## Beschreibung

Die vorliegende Erfindung betrifft eine Tragkonstruktion nach dem Oberbegriff des Anspruches 1 sowie ein Verfahren zur Montage einer Tragkonstruktion.

Die DE 20 2009 006 182 offenbart einen Unterstand, bei dem an einem Sockel jeweils vier Schrägstützen mit VV-förmiger Anordnung fixiert sind. Am oberen Ende der vier Schrägstützen ist ein Träger gelagert, an dem ein Dach montiert ist. Die Anordnung von vier Schrägstützen an einem Sockel ist gerade bei längeren Trägern statisch nachteilig. Zudem gestaltet sich die Montage aufwändig, da die schweren Träger von oben an den Schrägstützen montiert werden müssen, was es erforderlich macht, Hebevorrichtungen für schwere Teile auf der Baustelle einsetzen zu können. Zudem kann es aufgrund der starren Festlegung der Träger an den Schrägstützen zu erheblichen Wärmespannungen kommen.

Es ist daher Aufgabe der vorliegenden Erfindung, eine Tragkonstruktion und ein Verfahren zur Montage einer Tragkonstruktion zu schaffen, die einfach zu montieren ist und Toleranzen bei der Montage ausgleichen kann.

Diese Aufgabe wird mit einer Tragkonstruktion mit den Merkmalen des Anspruches 1 sowie einem Verfahren zur Montage einer Tragkonstruktion mit den Merkmalen des Anspruches 12 gelöst.

Bei der erfindungsgemäßen Tragkonstruktion ist ein Tragbalken an gegenüberliegenden Enden an oder in einem Halter aufgenommen und ist in einer Montageposition um eine horizontale Achse drehbar an einem Pfosten gelagert, um dann nach Ausrichtung des Tragbalkens an dem Pfosten fixiert zu werden. Dadurch ist es möglich, den Tragbalken von unten an den Halter zu montieren, der dann um eine horizontale Achse verschwenkt und an den Pfosten festgelegt wird. Dies ermöglicht eine Montage der Tragbalken ohne schwere Hebegeräte, die erst mühsam zur Baustelle transportiert werden müssen. Je nach Länge des Tragbalkens kann dieser sogar manuell an oder in dem Halter festgelegt werden. Zudem ist eine selbstlehrende Ausrichtung der Pfosten und der Halter möglich.

Vorzugsweise weisen die Halter eine U-förmige Aufnahme auf, in die ein Endabschnitt eines Tragbalkens einfügbar ist. Dabei kann in einer Montageposition die U-förmige Aufnahme nach unten geöffnet sein, um den Tragbalken einzuschieben, der dann an dem Halter vorfixiert wird. Anschließend kann der Halter zusammen mit den Tragbalken um die horizontale Achse gedreht und fixiert werden.

Gemäß einer bevorzugten Ausgestaltung umfassen die Träger einen Sockel, an dem zwei Pfosten in einer V-Förmigen Ausrichtung festgelegt sind. Dadurch können die statischen Belastungen auf die Pfosten gering gehalten werden, da keine extreme Schrägstellung der Pfosten notwendig ist.

Für eine stabile Tragkonstruktion kann an zwei an einem Träger festgelegten Pfosten ein Längsträger vorgesehen sein, der an den Haltern am oberen Ende der Pfosten festgelegt ist. Der Längsträger kann dabei an den Haltern über Schraubverbindungen fixiert sein. Es ist auch möglich, den Längsträger an den Haltern verschiebbar zu lagern, um auch eine Ausrichtung des Längsträgers relativ zu den Haltern vornehmen zu können, was Belastungen durch Spannungen vermeidet.

Für die Herstellung einer größeren Tragkonstruktion ist es vorteilhaft, wenn in der Ebene der zwei an einem Träger angeordneten Pfosten mindestens ein weiterer Träger mit zwei V-förmig angeordneten Pfosten vorgesehen ist. Vorzugsweise sind die Pfosten eines ersten Trägers mit den Pfosten eines zweiten Trägers über einen Längsträger miteinander verbunden, wobei der Längsträger an den Haltern an den einzelnen Pfosten fixiert werden kann. Dadurch kann ein durchgängiger Längsträger an einer Vielzahl von Pfosten gehalten werden, beispielsweise zwei, vier oder mehr Pfosten. Die Pfosten können dabei eine unterschiedliche Länge aufweisen, so dass der Längsträger geneigt zur Horizontalen ausgerichtet wird, was die Montage eines Schrägdaches ermöglicht.

Die Tragkonstruktion kann insbesondere als Unterstand eingesetzt werden, indem auf die Tragbalken und die Längsträger ein Dach montiert wird. Zusätzlich ist es möglich, die Tragkonstruktion auch für eine Solaranlage zu verwenden, beispielsweise wenn eine Unterkonstruktion an den Tragbalken oder dem Dach fixiert wird.

Bei dem erfindungsgemäßen Verfahren zur Montage der Tragkonstruktion werden zunächst mindestens zwei beabstandete Träger mit Sockeln mit jeweils zwei V-förmig angeordneten Pfosten montiert, wobei jeweils ein drehbar gelagerter Halter an jedem oberen Ende eines Pfostens montiert wird. Anschließend wird ein Tragbalken an zwei Haltern, die an Pfosten der beabstandeten Träger vorgesehen sind, festgelegt. Die Halter werden dann mit dem Tragbalken um eine horizontale Achse gedreht, um dann mit dem Tragbalken an den Pfosten fixiert zu werden. Dies ermöglicht eine einfache Montage und eine einfache Ausrichtung des Tragbalkens auch bei Toleranzen bei der Montage der Sockel.

Vorzugsweise wird an den Haltern an den Pfosten eines Trägers ein Längsträger fixiert, bevor die Halter mit den Tragbalken festgelegt werden. Dies ermöglicht eine selbstlehrende Montage, da der Tragbalken zunächst an den Haltern ausgerichtet wird und dabei ein Ausrichten der Halter an den Pfosten möglich ist, bevor diese dann über Schraub- oder Klemmverbindungen aneinander fixiert werden. Gleichermaßen ist es möglich, dass die Pfosten an dem Sockel mit einem gewissen Spiel gehalten sind, beispielsweise durch lose Schraubverbindungen, damit erst nach der Montage eines Längsträgers ein Anziehen der Verbindungsstellen am Sockel erfolgt, um die Pfosten zu fixieren. Eine solche selbstlehrende Konstruktion vermeidet Spannungen aufgrund von Toleranzen bei der Ausrichtung der Sockel, der Pfosten und/oder der Halter.

Die Erfindung wird nachfolgend anhand mehrerer Ausführungsbeispiele mit Bezug auf die beigefügten Zeichnungen näher erläutert. Es zeigen:
- Figur 1: eine perspektivische Explosionsdarstellung einer erfindungsgemäßen Tragkonstruktion;

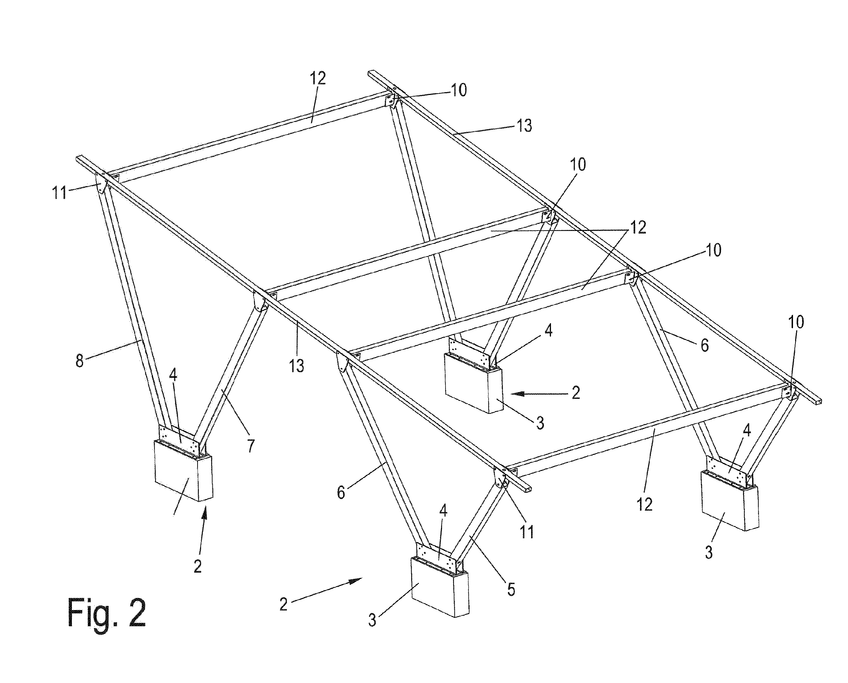

- Figur 2: eine perspektivische Ansicht eines Ausschnittes der Tragkonstruktion der Figur 1;
- Figur 3: eine vergrößerte perspektivische Ansicht der Tragkonstruktion der Figur 2;
- Figur 4: eine perspektivische Ansicht zweier Pfosten und eines Tragbalkens bei der Montage der erfindungsgemäßen Tragkonstruktion;
- Figur 5: eine perspektivische Ansicht einer Tragkonstruktion mit Solaranlage;
- Figur 6: eine perspektivische Detailansicht eines Seitenbereiches der Tragkonstruktion der Figur 5;
- Figuren 7A und 7B: zwei Ansichten eines modifizierten Längsträgers für eine erfindungsgemäße Tragkonstruktion, und
- Figuren 8A und 8B: zwei Ansichten eines weiteren Ausführungsbeispiels eines modifizierten Längsträgers für eine erfindungsgemäße Tragkonstruktion.

Eine Tragkonstruktion 1 umfasst eine Vielzahl bodenseitig festlegbarer Träger 2, die ein bodenseitig festgelegtes Fundament 3, beispielsweise aus Beton, aufweisen, an dem ein Sockel 4 festgelegt ist. Der Sockel 4 ist als U-förmiges Metallprofil ausgebildet, das bodenseitig an dem Fundament 3 festgelegt ist und zwei Seitenwände besitzt, an denen Pfosten 5, 6, 7, 8 festgelegt werden. Dabei sind an jedem Sockel 4 zwei Pfosten 5 und 6 oder 7 und 8 in einer V-förmigen Anordnung fixiert. Die Pfosten 5, 6, 7, 8 weisen eine unterschiedliche Länge auf, damit die Tragkonstruktion zur Montage eines Schrägdaches eingesetzt werden kann. Es ist natürlich möglich, die Pfosten 5, 6, 7, 8 auch in gleicher Länge vorzusehen.

Die Pfosten 5, 6, 7, 8 sind über Befestigungsmittel in Form von Schraubbolzen 9 an dem Sockel 4 festgelegt.

An den oberen Enden der Pfosten 5, 6, 7, 8 sind Halter 10 vorgesehen, die zur Festlegung von Tragbalken 12 dienen. Die Tragbalken 12 sind dabei im Wesentlichen senkrecht zu der Ebene angeordnet, die durch zwei Pfosten 5, 6, 7, 8 eines Trägers 2 aufgespannt wird. Neben den Haltern 10 sind äußere Halter 11 vorgesehen, die allerdings nicht zur Befestigung der Tragbalken 12 dienen, sondern lediglich zur Fixierung von Längsträgern 13 verwendet werden. Die Längsträger 13 sind jeweils in der von den Pfosten 5, 6, 7, 8 aufgespannten Ebene angeordnet, wobei in dem gezeigten Ausführungsbeispiel ein Längsträger 13 über vier Halter 10 und 11 endseitig an den Pfosten 5, 6, 7, 8 festgelegt ist. Es ist natürlich auch möglich, den Längsträger 13 nur an zwei Pfosten 5 und 6 oder mehr als vier Pfosten 5, 6, 7, 8 zu fixieren.

Die Tragbalken 12 und die Längsträger 13 sind in der montierten Position an ihrer Oberseite im Wesentlichen auf einer Ebene angeordnet, um die Montage eines Daches 19 zu erleichtern.

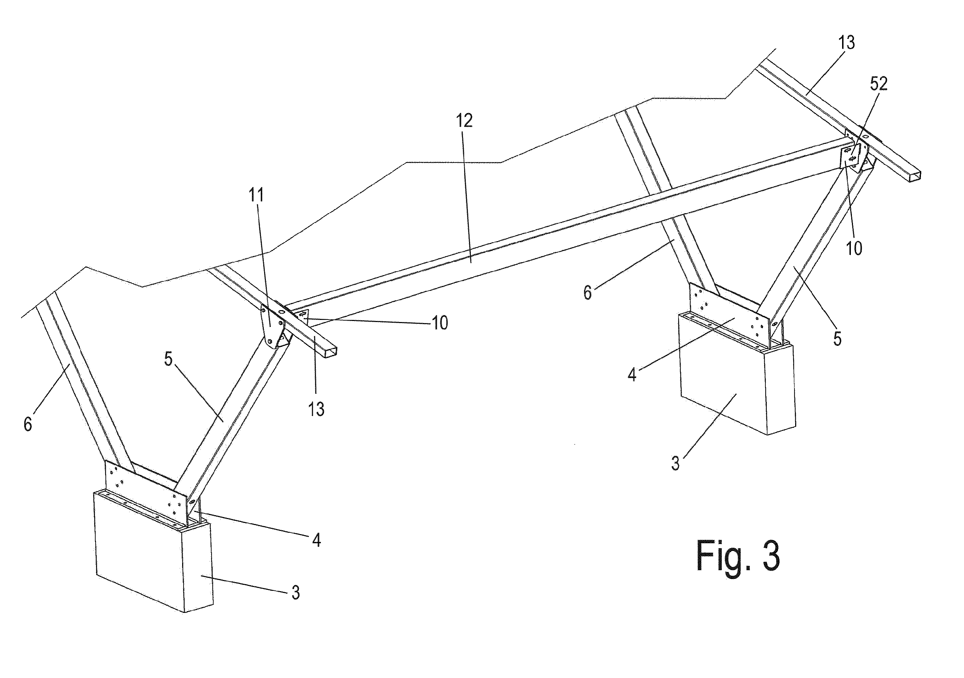

Wie in Figur 3 gezeigt ist, sind die Tragbalken 12 endseitig jeweils an einem Halter 10 gehalten, der eine Aufnahme 52 umfasst, in die die Tragbalken 12 eingesteckt werden können. Zudem sind die Tragbalken 12 in ihrer Längsrichtung verschieblich an den Haltern 10 aufgenommen.

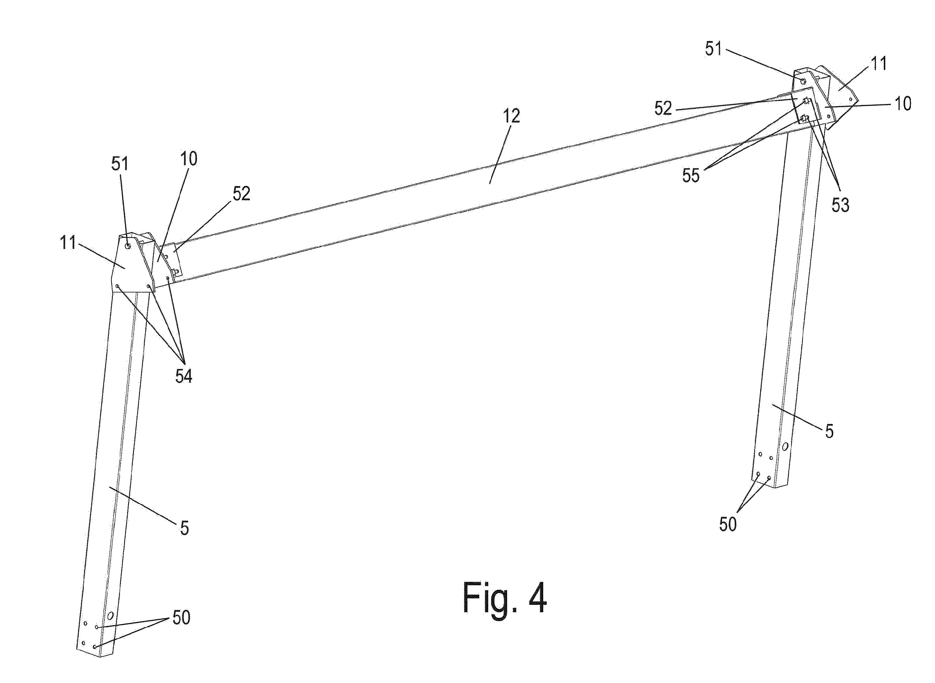

In Figur 4 ist eine Montageposition für einen Tragbalken 12 gezeigt, der zwischen zwei Pfosten 5 montiert werden soll. An den oberen Enden der beiden Pfosten 5 sind jeweils Halter 10 vorgesehen, die eine U-förmige Aufnahme 52 zum Einfügen eines Endabschnittes des Tragbalkens 12 aufwiesen. Die Halter 10 sind zusammen mit den äußeren Haltern 11 um eine Achse 51 drehbar an dem Pfosten 5 gelagert, wobei die Achse 51 durch einen Schraubbolzen gebildet werden kann. Nach dem Einstecken des Tragbalkens 12 in die nach unten offene Aufnahme 52 kann der Tragbalken 12 an den Aufnahmen 52 fixiert werden, beispielsweise über Befestigungsbolzen 55, die in die Langlöcher 53 an der Aufnahme 52 und durch den Tragbalken 12 gesteckt werden. Der Tragbalken 12 ist nun an den Haltern 10 fixiert, wobei nach Montage sämtlicher Tragbalken 12 diese nun aus der gezeigten Position nach oben geschwenkt werden können, bis die U-förmige Aufnahme nach oben hin offen ist, um dann den Tragbalken 12 in einer angehobenen Position an dem Pfosten 5 zu fixieren. An den Haltern 10 und 11 sind ferner noch Öffnungen 54 ausgebildet, die von Befestigungsmitteln durchgriffen werden können, um die Längsträger 13 zu montieren. Bodenseitig sind die Pfosten 5 mit vier Öffnungen 50 versehen, in die Befestigungsmittel in Form von Bolzen 9 zur Montage an den Sockeln 4 eingefügt werden können.

Für die Montage der Tragkonstruktion werden zunächst die Fundamente 3 gegossen und dann die Sockel 4 darauf fixiert. Anschließend werden die Pfosten 5, 6, 7, 8 an den Sockeln 4 in V-förmiger Ausrichtung lose fixiert, wobei die Befestigungsmittel 9 in Form von Schraubbolzen in die Öffnungen 50 der Pfosten 5 und der anderen Pfosten 6, 7, 8 eingesteckt werden, aber noch nicht festgeklemmt werden. Dadurch können die Pfosten 5, 6, 7, 8 mit einem gewissen Spiel relativ zu dem Sockel 4 verschwenkt werden. Anschließend werden die Halter 10 und 11 an den Pfosten 5, 6, 7, 8 montiert, die um die Achse 51 drehbar gelagert sind. An den Haltern 10 werden nun die Tragbalken 12 montiert, wie dies in Verbindung mit Figur 4 beschrieben wurde. Die Tragbalken 12 werden zusammen mit den Haltern 10 um eine horizontale Achse verschwenkt, um dann in einer angehobenen Position an den Pfosten 5, 6, 7 und 8 festgelegt zu werden.

Anschließend werden an den Haltern 10 und 11 die Längsträger 13 positioniert, die beispielsweise an der Seite der kürzeren Pfosten 5 von unten zwischen die Halter 10 und 11 eingeschoben werden können. Die endseitigen Halter 10 und 11 an den Pfosten 5, 6, 7 und 8 liegen meist nicht exakt auf einer Linie, wobei die Längsträger 13 an den Haltern 10 und 11 fixiert werden können, da die Pfosten 5, 6, 7, 8 an den Sockeln 4 noch in einem gewissen Maß beweglich angeordnet sind. Dadurch ist eine selbstlehrende Montage möglich, da die Pfosten 5, 6, 7, 8 durch die Längsträger ausgerichtet werden. Nach Montage der Längsträger 13 können dann die Pfosten 5, 6, 7, 8 an den Sockeln 4 klemmend festgelegt werden. Die Montage ermöglicht dadurch den Ausgleich von Toleranzen im Hinblick auf die Höhe der Sockel 4, der Ausrichtung der Pfosten 5, 6, 7, 8 und anderer Einflüsse. Die Tragkonstruktion 1 ist flexibel an solche Abweichungen anpassbar.

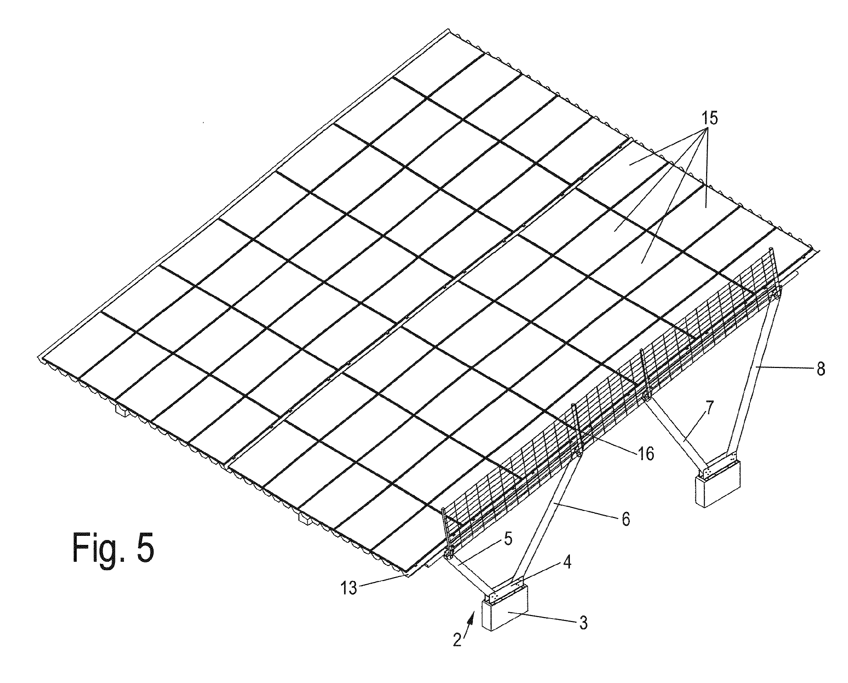

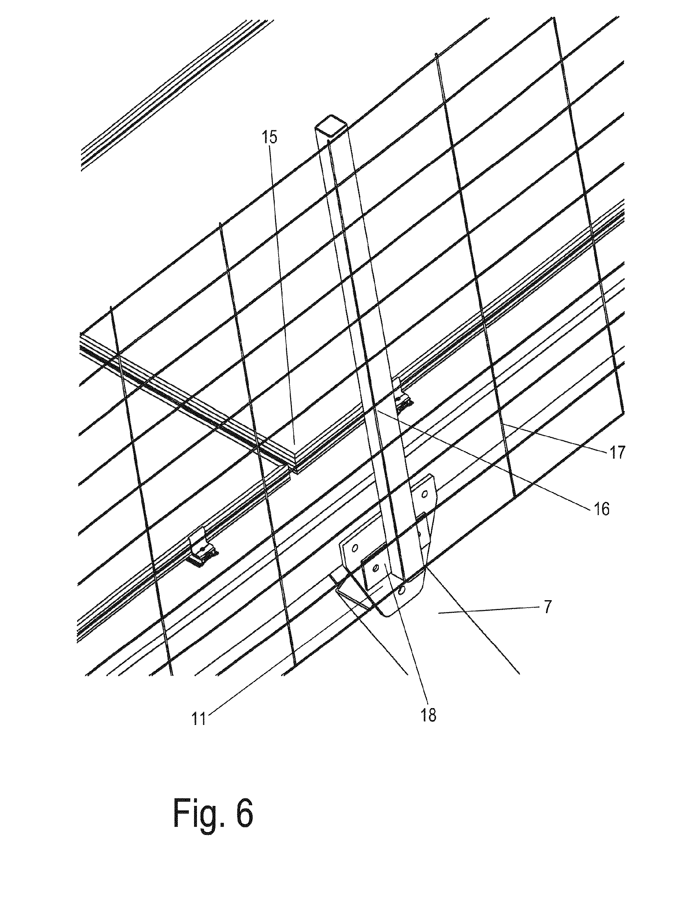

In Figur 5 ist eine Tragkonstruktion gezeigt, bei der an der Oberseite eine Solaranlage mit Photovoltaikmodulen 15 montiert ist. Um an der Seite des Daches eine Sicherung gegen Absturz bereitzustellen, sind an den äußeren Haltern 11 Pfosten 16 montiert, wie dies auch aus der vergrößerten Darstellung der Figur 6 erkennbar ist. Jeder Pfosten 16 ist über einen Flansch 18 an einem Halter 11 1 fixiert, wobei die Pfosten 16 ein Netz 17 halten, das auf dem Dach befindliche Personen gegen ein Abstürzen sichert.

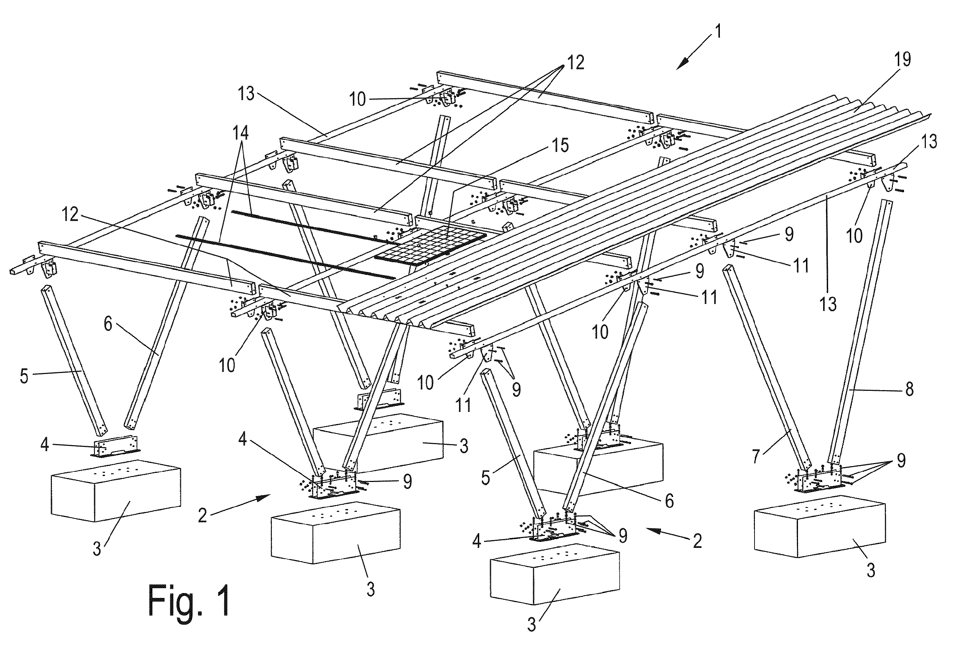

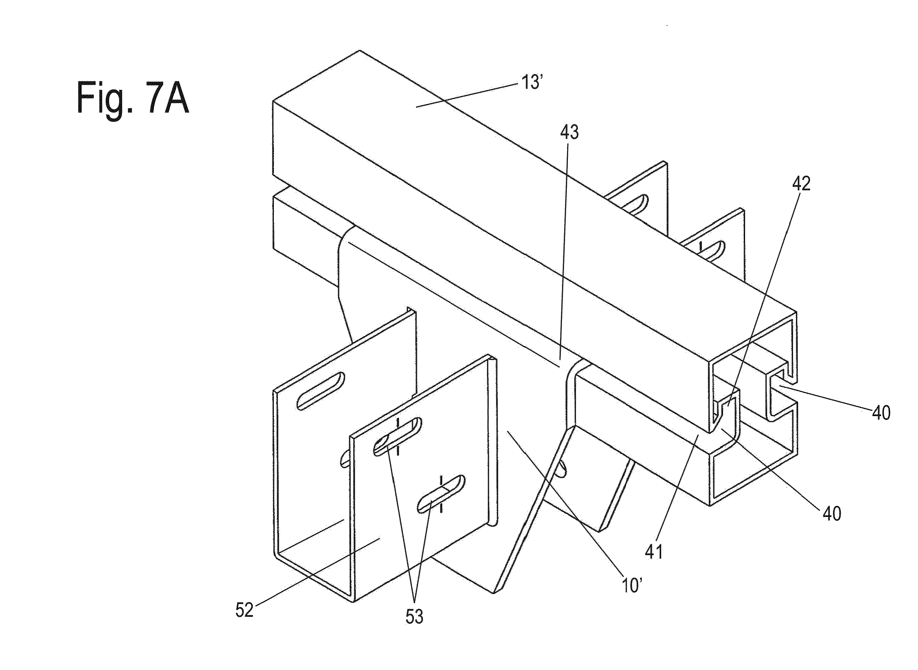

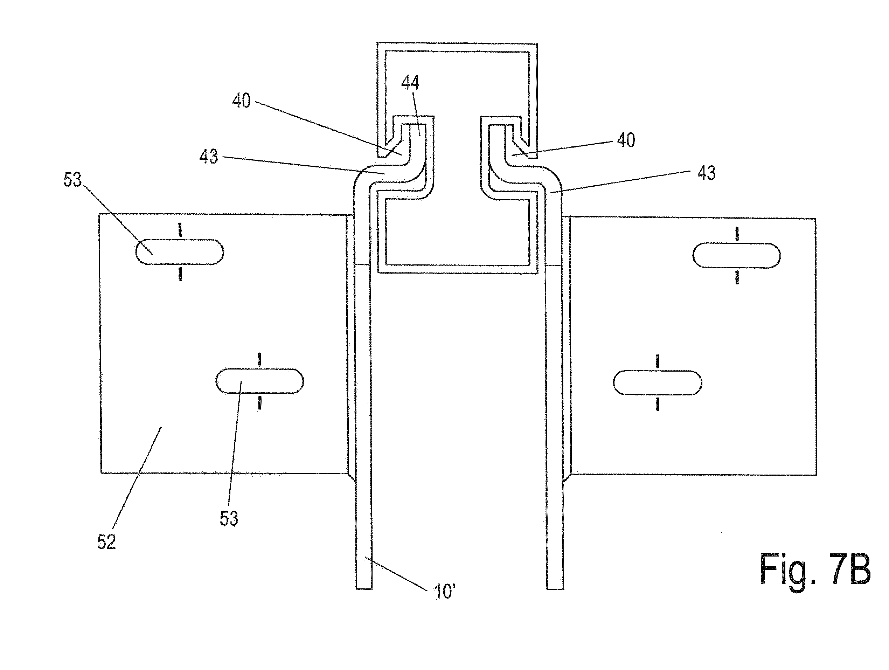

In den Figuren 7A und 7B ist eine weiter Ausführungsform für einen Querträger 13' für eine Tragkonstruktion der Figur 1 gezeigt. Bei der Tragkonstruktion der Figur 1 sind die Längsträger 13 über Befestigungsschrauben 9 starr mit den Haltern 10 und 11 verbunden. Es ist auch möglich, die Längsträger 13' entsprechend den Figuren 7A und 7B mit seitlichen Nuten 40 vorzusehen, an denen die Halter 10' verschiebbar gelagert sind. Die Halter 10' weisen wie bei dem vorangegangenen Ausführungsbeispiel eine U-förmige Aufnahme 52 auf, in denen horizontale Langlöcher 53 zur verschiebbaren Lagerung der Tragbalken 12 vorgesehen sind. Die Halter 10' weisen ferner einen Befestigungsabschnitt 44 auf, der winkelförmig gebogen ist und in die Nut 40 des Längsträgers 13' eingreift. Die Nut 40 weist dabei einen äußeren Schlitz 41 auf, der schmaler ausgebildet ist als ein Innenraum 42 der Nut, in die der winkelförmige Abschnitt 44 des Halters 10' eingreift. Dadurch kann der Halter 10' durch Einschwenken oder Einschieben an dem Längsträger 13' montiert werden. An der Nut 40 können zudem weitere Bauteile befestigt werden, beispielsweise die in Figur 5 gezeigten seitlichen Pfosten 16 für die Montage einer Absturzsicherung.

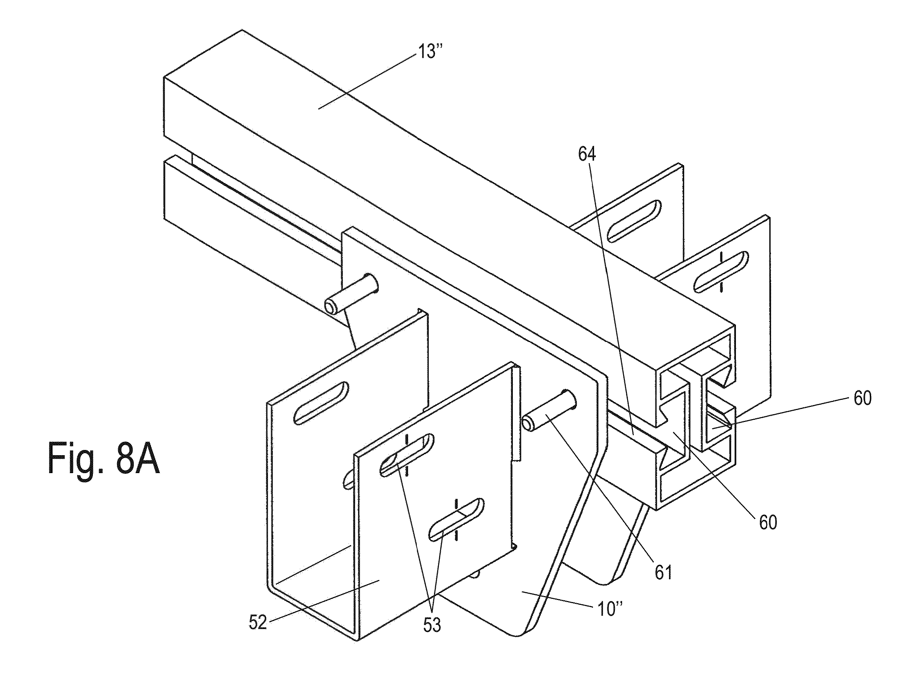

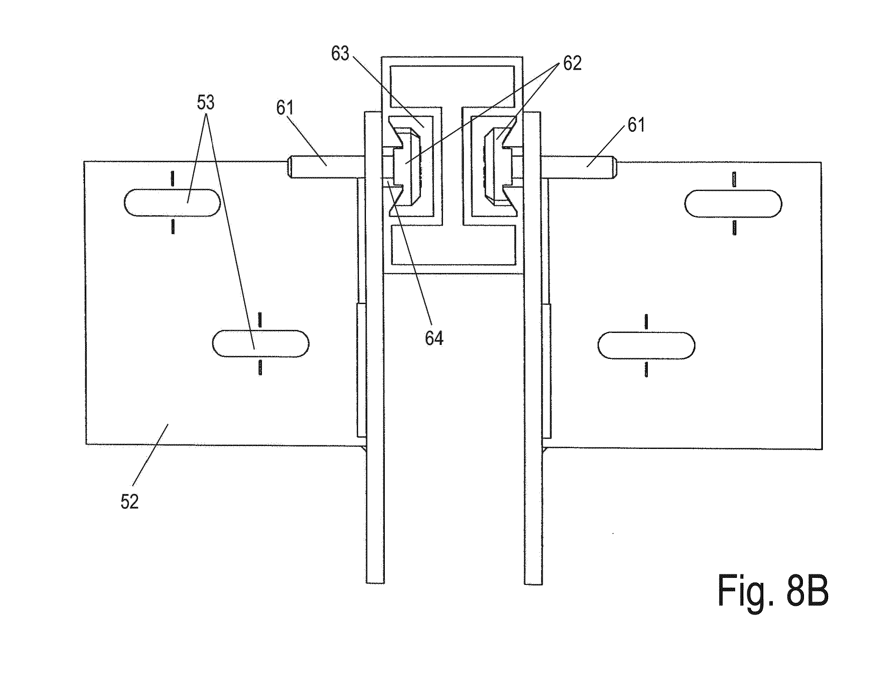

In den Figuren 8A und 8B ist eine weitere Ausführungsform eines Längsträgers 13" gezeigt, der bei der Tragkonstruktion der Figur 1 montiert werden kann. Der Längsträger 13" umfasst eine Nut 60, die einen verjüngten Halsabschnitt 64 aufweist, der schmaler ausgebildet ist als ein Innenraum der Nut 60. Dadurch können in der Nut 60 Schraubköpfe 62 angeordnet werden, die verschiebbar entlang der Nut 60 gelagert sind. An den Schraubköpfen 62 sind Schraubbolzen 61 vorgesehen, die die Öffnungen 54 in dem Halter 10" durchgreifen und somit den Halter 10" verschiebbar an dem Längsträger 13" lagern. Der Halter 10" ist im Übrigen wieder mit einer U-förmigen Aufnahme 52 mit horizontalen Langlöchern 53 zur Fixierung der Tragbalken 12 versehen. Wenn der Längsträger 13" an den Halter 10" montiert ist, kann der Halter 10" relativ zu dem Längsträger 13" über Muttern verspannt werden, die auf die Bolzen 61 aufgedreht werden. An der Nut 60 können zudem weitere Schraubbolzen 61 montiert werden, um andere Gegenstände zu befestigen.

Die erfindungsgemäße Tragkonstruktion kann auch auf der Baustelle noch weitgehend flexibel angepasst werden, wobei der Einsatz der Tragkonstruktion 1 als Unterstand, Dach, Solaranlage oder zur Dachbegrünung möglich ist. Auch andere Einsatzzwecke, beispielsweise für Carports oder Garagen, sind möglich.

**Bezugszeichenliste**

| | |
|---|---|
| 1 | Tragkonstruktion |
| 2 | Träger |
| 3 | Fundament |
| 4 | Sockel |
| 5 | Pfosten |
| 6 | Pfosten |
| 7 | Pfosten |
| 8 | Pfosten |
| 9 | Schraubbolzen |
| 10, 10', 10" | Halter |
| 11 | Halter |
| 12 | Tragbalken |
| 13, 13', 13" | Längsträger/Querträger |
| 15 | Photovoltaikmodul |
| 16 | Pfosten |
| 17 | Netz |
| 18 | Flansch |
| 19 | Dach |
| 40 | Nut |
| 41 | Schlitz |
| 42 | Innenraum |
| 44 | Befestigungsabschnitt |
| 50 | Öffnung |
| 51 | Achse |
| 52 | Aufnahme |
| 53 | Langloch |
| 54 | Öffnung |
| 55 | Befestigungsbolzen |
| 60 | Nut |
| 61 | Schraubbolzen |
| 62 | Schraubköpfe |
| 64 | Halsabschnitt |

## Patentansprüche

1. Tragkonstruktion (1), insbesondere für einen Unterstand, umfassend:
a) mindestens zwei bodenseitig festlegbare Träger (2);
b) die jeweils zwei V-förmig angeordnete Pfosten (5, 6, 7, 8) umfassen, wobei
c) zwei Pfosten (5, 6, 7, 8) zweier beabstandeter Träger (2) über einen quer zur Ebene der Pfosten (5, 6, 7, 8) angeordneten Tragbalken (12) verbunden sind und
d) der Tragbalken (12) an gegenüberliegenden Enden an oder in einem Halter (10) aufgenommen ist,
**dadurch gekennzeichnet, dass** die Halter (10) in einer Montageposition um eine horizontale Achse (51) drehbar an einem Pfosten (5, 6, 7, 8) gelagert sind und nach Ausrichtung des Tragbalkens (12) an dem Pfosten (5, 6, 7, 8) fixierbar sind.

2. Tragkonstruktion nach Anspruch 1, **dadurch gekennzeichnet, dass** die Halter (10, 10', 10") eine U-förmige Aufnahme (52) aufweisen, in die ein Endabschnitt eines Tragbalkens (12) einfügbar ist.

3. Tragkonstruktion nach Anspruch 1 oder 2, **dadurch gekennzeichnet, dass** die Träger (2) einen Sockel (4) umfassen, an dem zwei Pfosten (5, 6, 7, 8) in V-förmiger Ausrichtung festgelegt sind.

4. Tragkonstruktion nach einem der vorhergehenden Ansprüche, **dadurch gekennzeichnet, dass** an zwei an einem Träger (2) festgelegten Pfosten (5, 6, 7, 8) ein Längsträger (13) vorgesehen ist, der an den Haltern (10, 10', 10") am oberen Ende der Pfosten (5, 6, 7, 8) festgelegt ist.

5. Tragkonstruktion nach einem der vorhergehenden Ansprüche, **dadurch gekennzeichnet, dass** in der Ebene der zwei an einem Träger (2) angeordneten Pfosten (5, 6, 7, 8) mindestens ein weiterer Träger (2) mit zwei V-förmig angeordneten Pfosten (5, 6, 7, 8) vorgesehen ist.

6. Tragkonstruktion nach Anspruch 5, **dadurch gekennzeichnet, dass** die Pfosten (5, 6, 7, 8) eines ersten Trägers (2) mit Pfosten (5, 6, 7, 8) eines zweiten Trägers (2) über einen Längsträger (13) miteinander verbunden sind.

7. Tragkonstruktion nach einem der vorhergehenden Ansprüche, **dadurch gekennzeichnet, dass** die Längsträger (13) in ihrer Längsrichtung verschiebbar an den Haltern (10, 10', 10") gelagert sind.

8. Tragkonstruktion nach einem der vorhergehenden Ansprüche, **dadurch gekennzeichnet, dass** die Tragbalken (12) an einem Halter (10, 10', 10") in der Länge verschiebbar gelagert sind.

9. Tragkonstruktion nach einem der vorhergehenden Ansprüche, **dadurch gekennzeichnet, dass** auf den Tragbalken (12) ein Dach (19) montiert ist.

10. Tragkonstruktion nach Anspruch 9, **dadurch gekennzeichnet, dass** an mindestens einer Seite des Daches (19) nach oben hervorstehende Seitenpfosten (16) vorgesehen sind, an denen eine Absturzsicherung (17), insbesondere ein Netz, montiert ist.

11. Tragkonstruktion nach einem der vorhergehenden Ansprüche, **dadurch gekennzeichnet, dass** auf den Tragbalken (12) eine Unterkonstruktion (14) für eine Solaranlage festgelegt ist.

12. Verfahren zur Montage einer Tragkonstruktion (1), insbesondere nach einem der vorhergehenden Ansprüche, mit den folgenden Schritten:
- Montage mindestens zweier beabstandeter Träger (2) mit Sockeln (4) mit jeweils zwei V-förmig angeordneten Pfosten (5, 6, 7, 8);
- Montage eines drehbar gelagerten Halters (10, 10', 10") an jedem oberen Ende eines Pfostens (5, 6, 7, 8);
- Festlegen eines Tragbalkens (12) an zwei Haltern (10, 10', 10"), die an Pfosten (5, 6, 7, 8) der beabstandeten Träger (2) vorgesehen sind;
- Drehen der Halter (10, 10', 10") mit den Tragbalken (12) um eine horizontale Achse, und
- Fixieren des Halters (10, 10', 10") mit den Tragbalken (12).

13. Verfahren nach Anspruch 12, **dadurch gekennzeichnet, dass** an den Haltern (10, 10', 10") an den Pfosten (5, 6, 7, 8) eines Trägers (2) ein Längsträger (13) fixiert wird, bevor die Halter (10, 10', 10") mit den Tragbalken (12) festgelegt werden.

14. Verfahren nach Anspruch 12 oder 13, **dadurch gekennzeichnet, dass** jeder Halter (10, 10', 10") eine U-förmige Aufnahme (52) aufweist, in die ein Tragbalken (12) von unten eingeschoben wird, bevor der Halter (10, 10', 10") gedreht wird und die U-förmige Aufnahme (52) nach oben offen ausgerichtet wird.

15. Verfahren nach einem der Ansprüche 12 bis 14, **dadurch gekennzeichnet, dass** die Pfosten (5, 6, 7, 8) an dem Sockel (4) mit Spiel gehalten sind und eine Festlegung der Pfosten (5, 6, 7, 8) erst erfolgt, wenn die Tragbalken und/oder die Längsträger (13) an den Haltern (10, 10', 10") fixiert sind.
